# EUROPEAN PATENT APPLICATION

(11) **EP 4 794 365 A1**
(43) Date of publication of application: **19.08.2026**
(21) Application number: 24884308.8
(22) Date of filing: 24.09.2024
(51) Int. Cl.: H04W 12/0431

(54) **DATA TRANSMISSION METHOD AND DEVICE**

(30) Priority: 03.11.2023 CN 202311460695
(71) Applicant: HUAWEI TECHNOLOGIES CO., LTD., Shenzhen, Guangdong 518129 (CN)
(72) Inventor: CHEN, Lei, Shenzhen, Guangdong 518129 (CN); XIANG, Hongyu, Shenzhen, Guangdong 518129 (CN)
(74) Representative: MERH-IP Matias Erny Reichl Hoffmann Patentanwälte PartG mbB
(86) International application number: PCT/CN2024/120525
(87) International publication number: WO 2025/092301

(57) **Abstract**

This application provides a data transmission method, and an apparatus. The method includes: receiving a first downlink reference signal, and obtaining a first key based on the first downlink reference signal; sending a first uplink reference signal; and receiving a first message, determining a third key based on the first key and check information of a second key, and performing, based on the third key, security protection on data transmitted between a first communication apparatus and a second communication apparatus, where the second key is obtained by the second communication apparatus based on the received first uplink reference signal. According to the method, security protection can be performed on data transmitted in a random access procedure.

## Description

This application claims priority to Chinese Patent Application No. 202311460695.7, filed with the China National Intellectual Property Administration on November 3, 2023 and entitled "DATA TRANSMISSION METHOD, AND APPARATUS", which is incorporated herein by reference in its entirety.

### TECHNICAL FIELD

This application relates to the communication field, and more specifically, to a data transmission method, and an apparatus.

### BACKGROUND

Security is a highly valuable feature of cellular networks. Communication security not only affects user data security, but also has great impact on normal industrial production. Therefore, security technologies evolve along with cellular network evolution.

In a cellular network, an initial access procedure (or referred to as a random access procedure) is a mandatory process for a terminal device to access a network to obtain a service. Because a core network-based key derivation mechanism is used in the cellular network, in the random access procedure of the terminal device, the terminal device and a network device cannot obtain aligned keys for protection of the random access procedure. However, some current attacks are accordingly launched to the random access procedure of the terminal device, affecting security of the terminal device and even the network.

In view of this, how to resolve a security protection problem in the random access procedure becomes an urgent problem to be resolved.

### SUMMARY

This application provides a data transmission method, to perform security protection on data transmitted in a random access procedure.

According to a first aspect, a data transmission method is provided. The method may be performed by a first communication apparatus. The first communication apparatus may be a terminal device, may be a component of the terminal device, for example, a circuit, a chip, or a chip system of the terminal device, or may be a logical module or software that can implement all or some functions of the terminal device.

The method includes: receiving a first downlink reference signal, and obtaining a first key based on the first downlink reference signal; sending a first uplink reference signal; receiving a first message, where the first message includes check information of a second key, and the second key is obtained by a second communication apparatus based on the received first uplink reference signal; determining a third key based on the first key and the check information of the second key; and performing, based on the third key, security protection on data transmitted between the first communication apparatus and the second communication apparatus.

In an example, the receiving the first downlink reference signal may be that the first communication apparatus receives the first downlink reference signal sent by the second communication apparatus; the sending the first uplink reference signal may be that the first communication apparatus sends the first uplink reference signal to the second communication apparatus; and the receiving the first message may be that the first communication apparatus receives the first message sent by the second communication apparatus.

The first communication apparatus is a chip of the terminal device, for example, a baseband chip. The receiving the first downlink reference signal or the first message may be that the baseband chip of the terminal device receives the first downlink reference signal or the first message, that is, the first downlink reference signal or the first message is used as an input of the baseband chip of the terminal device. The sending the first uplink reference signal may be that the baseband chip of the terminal device outputs the first uplink reference signal, for example, outputs the first uplink reference signal to a radio frequency signal of the terminal device.

It should be understood that the data transmitted between the first communication apparatus and the second communication apparatus may include data, signaling, and the like transmitted between the first and second communication apparatuses.

It should be further understood that the security protection may include but is not limited to: performing encryption and/or integrity protection on the data transmitted between the first communication apparatus and the second communication apparatus.

In the foregoing technical solution, the first communication apparatus negotiates an aligned key with the second communication apparatus in a random access procedure, and performs, by using the aligned key, security protection on data transmitted between the first communication apparatus and the second communication apparatus. In this way, the random access procedure can be protected, an attacker is prevented from attacking the random access procedure of the first communication apparatus, and security of the first communication apparatus and even the second communication apparatus is protected.

With reference to the first aspect, in some implementations of the first aspect, when sending the first uplink reference signal, the first communication apparatus further sends a preamble.

Specifically, when sending the first uplink reference signal to the second communication apparatus, the first communication apparatus may further send a preamble to the second communication apparatus.

In the foregoing technical solution, the first communication apparatus may send the first uplink reference signal and the preamble (preamble) together, so that the second communication apparatus can measure the first uplink reference signal after estimating a TA by using the preamble (preamble), and a result of measuring the first uplink reference signal by the second communication apparatus is more accurate.

With reference to the first aspect, in some implementations of the first aspect, before receiving the first downlink reference signal, the first communication apparatus further receives system information, where the system information includes measurement configuration information and quantization configuration information; and the first communication apparatus measures the first downlink reference signal based on the measurement configuration information, to obtain a measurement result of the first downlink reference signal; and quantizes the measurement result of the first downlink reference signal based on the quantization configuration information, to obtain the first key.

In the foregoing technical solution, the second communication apparatus may send key generation configuration information to the first communication apparatus by using the system information, so that the first communication apparatus and the second communication apparatus can subsequently generate aligned keys by using the same configuration information.

With reference to the first aspect, in some implementations of the first aspect, it is determined, based on the first key and the check information of the second key, that the first key and the second key are aligned, and the first key is determined as the third key; or calculation is performed on the first key to obtain a fourth key, and the fourth key is determined as the third key.

It should be understood that alignment of the first key and the second key may be understood as that the first key is the same as or consistent with the second key.

It should be further understood that an algorithm used to perform calculation on the first key is not specifically limited in this application, and any algorithm that can implement privacy amplification on the first key may be used. In an implementation, the algorithm is a hash algorithm.

Calculation is performed on the first key to obtain the fourth key, and the fourth key is determined as the third key. In this way, security of data transmitted between the first communication apparatus and the second communication apparatus can be further enhanced.

With reference to the first aspect, in some implementations of the first aspect, it is determined, based on the first key and the check information of the second key, that the first key and the second key are not aligned; a second uplink reference signal is sent on a resource indicated by the first message; a second downlink reference signal is received, and a fifth key is obtained based on the second downlink reference signal; check information of a sixth key is received; and the third key is determined based on the fifth key and the check information of the sixth key.

It should be understood that non-alignment of the first key and the second key may be understood as that the first key is different from or inconsistent with the second key.

It should be further understood that the sixth key is obtained by the second communication apparatus based on the received second uplink reference signal.

For a process of determining the third key based on the fifth key and the check information of the sixth key, refer to the process of determining the third key based on the first key and the check information of the third key. For example, if it is determined, based on the fifth key and the check information of the sixth key, that the fifth key and the sixth key are aligned, the fifth key is determined as the third key; or calculation is performed on the fifth key to obtain an eleventh key, and the eleventh key is determined as the third key.

In the foregoing technical solution, the second uplink reference signal may be sent on the resource indicated by the first message, to avoid re-sending the preamble and the second uplink reference signal, thereby reducing delay overheads.

With reference to the first aspect, in some implementations of the first aspect, the first message further includes a first redundancy version RV (Redundancy Version) of a first encoding matrix. The first key is decoded based on the first RV of the first encoding matrix to obtain a seventh key; and the third key is determined based on the seventh key and the check information of the second key.

It should be understood that the first encoding matrix is determined by the second communication apparatus based on the second key.

With reference to the first aspect, in some implementations of the first aspect, it is determined, based on the seventh key and the check information of the second key, that the seventh key and the second key are aligned, and the seventh key is determined as the third key.

With reference to the first aspect, in some implementations of the first aspect, it is determined, based on the seventh key and the check information of the second key, that the seventh key and the second key are not aligned; an RV request message is sent, where the RV request message is used to request a second RV of the first encoding matrix; the first key is decoded based on the first RV and the second RV of the first encoding matrix to obtain an eighth key; and it is determined, based on the eighth key and the check information of the second key, that the eighth key and the second key are aligned, and the eighth key is determined as the third key.

In the foregoing technical solution, an encoding information mechanism of different RVs of an encoding matrix is introduced, so that encoding information can be applied for one by one, thereby reducing high signaling overheads caused by delivering the entire encoding information.

With reference to the first aspect, in some implementations of the first aspect, if it is determined, based on the eighth key and the check information of the second key, that the eighth key and the second key are not aligned, a fallback may be further performed to send the second uplink reference signal on the resource indicated by the first message, obtain the fifth key based on the second downlink reference signal, and determine the third key based on the fifth key and the check information of the sixth key.

In other words, in the foregoing implementation, when the first key and the second key are not aligned, before sending the second uplink reference signal to the second communication apparatus on the resource indicated by the first message, the first communication apparatus may first decode the first key based on the received first RV and second RV of the first encoding matrix to obtain the eighth key. If the eighth key and the second key are not aligned, the first communication apparatus sends the second uplink reference signal to the second communication apparatus on the resource indicated by the first message. The second communication apparatus obtains the sixth key based on the received second uplink reference signal, the first communication apparatus obtains the fifth key based on the second downlink reference signal sent by the second communication apparatus, and the first communication apparatus determines the third key based on the fifth key and the check information of the sixth key. For a specific process in which the first communication apparatus determines the third key based on the fifth key and the check information of the sixth key, refer to the descriptions in the foregoing implementation. Details are not described herein again.

With reference to the first aspect, in some implementations of the first aspect, the first message is a random access response (random access response, RAR) message.

In the foregoing technical solution, check information of a key is carried in the RAR message, so that no new dedicated information reconciliation message needs to be added, thereby reducing delay overheads.

According to a second aspect, a data transmission method is provided. The method may be performed by a second communication apparatus. The second communication apparatus may be a network device, may be a component of the network device, for example, a circuit, a chip, or a chip system of the network device, or may be a logical module or software that can implement all or some functions of the network device.

The method includes: sending a first downlink reference signal; receiving a first uplink reference signal, and obtaining a second key based on the first uplink reference signal; sending a first message, where the first message includes check information of the second key; determining a ninth key based on the second key; and performing, based on the ninth key, security protection on data transmitted between the second communication apparatus and a first communication apparatus.

In an example, the sending the first downlink reference signal or the first message may be that the second communication apparatus sends the first downlink reference signal or the first message to the first communication apparatus, and the receiving the first uplink reference signal may be that the second communication apparatus receives the first uplink reference signal sent by the first communication apparatus.

The second communication apparatus is a chip of the network device, for example, a baseband chip. The receiving the first uplink reference signal may be that the baseband chip of the network device receives the first uplink reference signal, that is, the first uplink reference signal is received as an input of the baseband chip of the network device. The sending the first downlink reference signal or the first message may be that the baseband chip of the network device outputs the first downlink reference signal or the first message, for example, the first downlink reference signal or the first message is output to a radio frequency signal of the network device.

With reference to the second aspect, in some implementations of the second aspect, the method further includes: broadcasting system information, where the system information includes measurement configuration information and quantization configuration information; measuring the first uplink reference signal based on the measurement configuration information, to obtain a measurement result of the first uplink reference signal; and quantizing the measurement result of the first uplink reference signal based on the quantization configuration information, to obtain the second key.

With reference to the second aspect, in some implementations of the second aspect, the method further includes: receiving a preamble.

In an example, when receiving the first uplink reference signal sent by the first communication apparatus, the second communication apparatus further receives a preamble sent by the first communication apparatus.

With reference to the second aspect, in some implementations of the second aspect, the first key and the second key are aligned, and the second key is determined as the ninth key; or calculation is performed on the second key to obtain a tenth key, and the tenth key is determined as the ninth key.

With reference to the second aspect, in some implementations of the second aspect, the first key and the second key are not aligned, and a second downlink reference signal is sent; a second uplink reference signal is received on a resource indicated by the first message; a sixth key is obtained based on the second uplink reference signal; check information of the sixth key is sent by using the first message; and the ninth key is determined based on a fifth key and the check information of the sixth key, where the fifth key is obtained by the first communication apparatus based on the second downlink reference signal.

It should be understood that a process of determining the ninth key based on the fifth key and the check information of the sixth key is the same as the process of determining the ninth key based on the second key. Specifically, if the fifth key and the sixth key are aligned, the sixth key may be determined as the ninth key; or calculation is performed on the sixth key to obtain a twelfth key, and the twelfth key is determined as the ninth key.

With reference to the second aspect, in some implementations of the second aspect, a first encoding matrix is determined based on the second key; and a first redundancy version RV of the first encoding matrix is sent by using the first message.

With reference to the second aspect, in some implementations of the second aspect, the method further includes: receiving an RV request message, where the RV request message is used to request a second RV of the first encoding matrix; and sending the second RV of the first encoding matrix based on the RV request message by using the first message.

With reference to the second aspect, in some implementations of the second aspect, the first message is a random access response RAR message.

It should be understood that for beneficial effects of the second aspect, refer to the beneficial effects of the first aspect. Details are not described herein again.

According to a third aspect, a communication apparatus is provided. The apparatus may be a terminal device, or may be a chip or a circuit configured in the terminal device. This is not limited in this application. The apparatus includes: a transceiver unit and a processing unit. The transceiver unit is configured to receive a first downlink reference signal, and the processing unit is configured to obtain a first key based on the first downlink reference signal; the transceiver unit is further configured to: send a first uplink reference signal, and receive a first message, where the first message includes check information of a second key, and the second key is obtained by a second communication apparatus based on the received first uplink reference signal; and the processing unit is further configured to determine a third key based on the first key and the check information of the second key, and perform, based on the third key, security protection on data transmitted between a first communication apparatus and the second communication apparatus.

With reference to the third aspect, in some implementations of the third aspect, when sending the first uplink reference signal, the transceiver unit is further configured to send a preamble.

With reference to the third aspect, in some implementations of the third aspect, before receiving the first downlink reference signal, the transceiver unit is further configured to receive system information, where the system information includes measurement configuration information and quantization configuration information; and the processing unit is further configured to: measure the first downlink reference signal based on the measurement configuration information, to obtain a measurement result of the first downlink reference signal; and quantize the measurement result of the first downlink reference signal based on the quantization configuration information, to obtain the first key.

With reference to the third aspect, in some implementations of the third aspect, the processing unit is further configured to: determine, based on the first key and the check information of the second key, that the first key and the second key are aligned, and determine the first key as the third key; or perform calculation on the first key to obtain a fourth key, and determine the fourth key as the third key.

With reference to the third aspect, in some implementations of the third aspect, the processing unit is further configured to determine, based on the first key and the check information of the second key, that the first key and the second key are not aligned; the transceiver unit is further configured to send a second uplink reference signal on a resource indicated by the first message, and receive a second downlink reference signal; the processing unit is further configured to obtain a fifth key based on the second downlink reference signal; and the transceiver unit is further configured to receive check information of a sixth key, and determine the third key based on the fifth key and the check information of the sixth key.

With reference to the third aspect, in some implementations of the third aspect, the first message further includes a first redundancy version RV of a first encoding matrix. The processing unit is further configured to decode the first key based on the first RV of the first encoding matrix to obtain a seventh key, and determine the third key based on the seventh key and the check information of the second key.

With reference to the third aspect, in some implementations of the third aspect, the processing unit is further configured to determine, based on the seventh key and the check information of the second key, that the seventh key and the second key are aligned, and determine the seventh key as the third key.

With reference to the third aspect, in some implementations of the third aspect, the processing unit is further configured to determine, based on the seventh key and the check information of the second key, that the seventh key and the second key are not aligned; the transceiver unit is further configured to send an RV request message, where the RV request message is used to request a second RV of the first encoding matrix; and the processing unit is further configured to decode the first key based on the first RV and the second RV of the first encoding matrix to obtain an eighth key; and determine, based on the eighth key and the check information of the second key, that the eighth key and the second key are aligned, and determine the eighth key as the third key.

With reference to the third aspect, in some implementations of the third aspect, the first message is a random access response RAR message.

According to a fourth aspect, a communication apparatus is provided. The apparatus may be a network device, or may be a chip or a circuit configured in the network device. This is not limited in this application. The apparatus includes a transceiver unit and a processing unit. The transceiver unit is configured to send a first downlink reference signal, and receive a first uplink reference signal; the processing unit is configured to obtain a second key based on the first uplink reference signal; the transceiver unit is further configured to send a first message, where the first message includes check information of the second key; and the processing unit is further configured to determine a ninth key based on the second key, and perform, based on the ninth key, security protection on data transmitted between a second communication apparatus and a first communication apparatus.

With reference to the fourth aspect, in some implementations of the fourth aspect, the transceiver unit is further configured to receive a preamble.

With reference to the fourth aspect, in some implementations of the fourth aspect, the first key and the second key are aligned, and the processing unit is further configured to determine the second key as the ninth key; or perform calculation on the second key to obtain a tenth key, and determine the tenth key as the ninth key.

With reference to the fourth aspect, in some implementations of the fourth aspect, the first key and the second key are not aligned; the transceiver unit is further configured to send a second downlink reference signal, and receive a second uplink reference signal on a resource indicated by the first message; the processing unit is further configured to obtain a sixth key based on the second uplink reference signal; the transceiver unit is further configured to send check information of the sixth key by using the first message; and the processing unit is further configured to determine the ninth key based on a fifth key and the check information of the sixth key, where the fifth key is obtained by the first communication apparatus based on the second downlink reference signal.

With reference to the fourth aspect, in some implementations of the fourth aspect, the processing unit is further configured to determine a first encoding matrix based on the second key; and the transceiver unit is further configured to send a first redundancy version RV of the first encoding matrix by using the first message.

With reference to the fourth aspect, in some implementations of the fourth aspect, the transceiver unit is further configured to receive an RV request message, where the RV request message is used to request a second RV of the first encoding matrix; and the processing unit is further configured to send the second RV of the first encoding matrix based on the RV request message by using the first message.

With reference to the fourth aspect, in some implementations of the fourth aspect, the first message is a random access response RAR message.

According to a fifth aspect, a communication apparatus is provided, including at least one processor. The processor is configured to cause, by executing computer instructions stored in a memory or by using a logic circuit, the communication apparatus to perform the method according to any one of the foregoing aspects.

In some possible designs, the communication apparatus further includes a memory, configured to store computer instructions and/or a configuration file of the logic circuit. Optionally, the memory and the processor are integrated together, or the memory is independent of the processor.

According to a sixth aspect, a communication apparatus is provided, including a processor and a communication interface. The communication interface is configured to input and/or output a signal. The processor is configured to execute a computer program or instructions, to cause the communication apparatus to perform the method according to any one of the foregoing aspects.

In some possible designs, the communication interface is an interface circuit, and is configured to read and write computer instructions. For example, the interface circuit is configured to receive computer-executable instructions (where the computer-executable instructions are stored in the memory, and may be directly read from the memory, or may be read via another component), and transmit the computer-executable instructions to the processor.

In some possible designs, the communication interface is configured to communicate with a unit other than the communication apparatus.

In some possible designs, the communication apparatus may be a chip or a chip system. When the apparatus is a chip system, the chip system may include a chip, or may include a chip and another discrete component.

According to a seventh aspect, a communication apparatus is provided. The communication apparatus includes a logic circuit and an interface circuit. The interface circuit is configured to input information and/or output information. The logic circuit is configured to perform the method according to any one of the foregoing aspects, and perform processing and/or generate to-be-output information based on the input information.

According to an eighth aspect, a computer-readable storage medium is provided. The computer-readable storage medium stores a computer program or instructions. When the computer program or the instructions are executed by a processor, the method according to any one of the foregoing aspects is caused to be performed.

According to a ninth aspect, a computer program product is provided. When the computer program product is executed by a processor, the method according to any one of the foregoing aspects is caused to be performed.

According to a tenth aspect, a communication system is provided. The system includes the communication apparatus according to the third aspect and the communication apparatus according to the fourth aspect.

### BRIEF DESCRIPTION OF DRAWINGS

FIG. 1 is a diagram of a system architecture according to an embodiment of this application;
FIG. 2 is a schematic flowchart of a random access procedure and secure activation in a current cellular network;
FIG. 3 is a schematic flowchart of a data transmission method according to an embodiment of this application;
FIG. 4 is a schematic flowchart of another data transmission method according to an embodiment of this application;
FIG. 5 is a schematic flowchart of another data transmission method according to an embodiment of this application;
FIG. 6 is a block diagram of a communication apparatus according to an embodiment of this application;
FIG. 7 is a diagram of another structure of a communication apparatus according to an embodiment of this application; and
FIG. 8 is a diagram of another structure of a communication apparatus according to an embodiment of this application.

### DESCRIPTION OF EMBODIMENTS

The following describes technical solutions of this application with reference to accompanying drawings.

Terms "first", "second", and the like in the specification, claims, and accompanying drawings of this application are used to distinguish between different objects, and are not used to describe a specific sequence. In addition, the terms "including" and "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned below indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate the following three cases: Only A exists, only B exists, and both A and B exist, where A and B may be singular or plural. The character "/" usually represents an "or" relationship between corresponding objects. "At least one item (piece) of the following" or a similar expression thereof means any combination of these items, including a singular item (piece) or any combination of plural items (pieces). For example, at least one (piece) of a, b, or c may represent: a, b, c, "a and b", "a and c", "b and c", or "a, b, and c", where a, b, and c may be singular or plural.

For ease of description, the following describes a system architecture in embodiments of this application in detail.

The technical solutions in embodiments of this application may be applied to various communication systems, for example, a global system for mobile communications (Global System of Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th Generation, 5G) mobile communication system or new radio (new radio, NR). The 5G mobile communication system may be non-standalone (non-standalone, NSA) networking or standalone (standalone, SA) networking.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle to X device (vehicle to X, V2X, X can stand for anything). For example, the V2X may include: vehicle to vehicle (vehicle to vehicle, V2V) communication, vehicle to infrastructure (vehicle to infrastructure, V2I) communication, vehicle to pedestrian communication (vehicle to vehicle, V2P), vehicle to network (vehicle to network, V2N) communication, or the like.

The technical solutions provided in this application may be further applied to a future communication system, for example, a 6th generation (6th Generation, 6G) mobile communication system. This is not limited in this application.

A device in the communication system may send a signal to another device or receive a signal from another device. The signal may include information, signaling, data, or the like. The device may alternatively be replaced with an entity, a network entity, a communication device, a communication unit, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

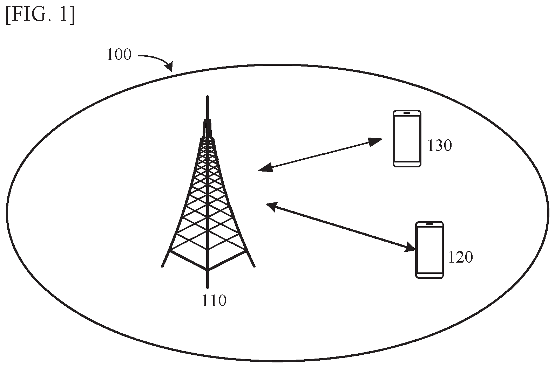

FIG. 1 is a diagram of a communication system 100 according to an embodiment of this application; As shown in FIG. 1, the communication system 100 includes a network device 110, a terminal device 120, and a terminal device 130. The network device 110 may send downlink signals to the terminal device 120 and the terminal device 130, and the terminal device 120 and the terminal device 130 each may send an uplink signal to the network device 110.

It should be understood that quantities of terminal devices and network devices included in the communication system are not specifically limited in embodiments of this application. In FIG. 1, an example in which the communication system 100 includes one network device and two terminal devices is used for description.

The terminal device involved in embodiments of this application is a user-side entity configured to receive or transmit a signal. The terminal device may be a device that provides voice and/or data connectivity for a user, for example, a handheld device or a vehicle-mounted device with a wireless connection function. The terminal device may also be another processing device connected to a wireless modem. The terminal device may communicate with a radio access network (radio access network, RAN).

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like.

A terminal device in embodiments of this application includes various devices having a wireless communication function, and the terminal device may be configured to connect to a person, an object, a machine, and the like. The terminal device may be widely used in various scenarios, such as cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wearable, smart transportation, a smart city, an uncrewed aerial vehicle, a robot, remote sensing, passive sensing, positioning, navigation and tracking, and autonomous delivery. The terminal device may be a terminal in any one of the foregoing scenarios, such as an MTC terminal or an IoT terminal. The terminal device may be user equipment (user equipment, UE) in a 3rd generation partnership project (3rd generation partnership project, 3GPP) standard, a terminal (terminal), a fixed device, a mobile station (mobile station) device or a mobile device, a subscriber unit (subscriber unit), a handheld device, a vehicle-mounted device, a wearable device, a cellular phone (cellular phone), a smartphone (smartphone), a session initiation protocol (session initiation protocol, SIP) phone, a wireless data card, a personal digital assistant (personal digital assistant, PDA), a computer, a tablet computer, a notebook computer, a wireless modem, a handset (handset), a laptop computer (laptop computer), a computer having a wireless transceiver function, a smart book, a vehicle, a satellite, a global positioning system (global positioning system, GPS) device, a target tracking device, a flight vehicle (for example, an uncrewed aerial vehicle, a helicopter, a multi-helicopter, a four-helicopter, or an airplane), a ship, a remote control device, a smart home device, an industrial device, an apparatus disposed in the foregoing device (for example, a communication unit, a modem, or a chip in the foregoing device), or another processing device connected to a wireless modem. For ease of description, an example in which the terminal device is a terminal or UE is used below for description.

The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In embodiments of this application, the terminal device may alternatively be a vehicle or an entire vehicle, and may implement communication via the internet of vehicles, or may be a component located in the vehicle (for example, placed in the vehicle or installed in the vehicle), that is, an on-board terminal device, an on-board unit, or an on-board unit (on-board unit, OBU).

In addition, the terminal device may further include a sensor like an intelligent printer, a train detector, or a gas station, which mainly functions to collect data (a part of terminal devices), receive control information and downlink data from a network device, send an electromagnetic wave, and transmit uplink data to the network device.

In this application, an apparatus configured to implement a function of the terminal device may be the terminal device, or may be an apparatus that can support the terminal device in implementing the function, for example, a chip system, a hardware circuit, a software unit, or a combination of the hardware circuit and the software unit. The apparatus may be mounted in the terminal device or may be used together with the terminal device. In the technical solutions provided in this disclosure, an example in which the apparatus configured to implement the function of the terminal device is the terminal device and the terminal device is UE is used to describe the technical solutions provided in this disclosure.

The network device in embodiments of this application is an entity that is on a network side that is configured to transmit or receive a signal, and may be configured to mutually convert a received over-the-air frame and an internet protocol (internet protocol, IP) packet, and serve as a router between the terminal device and a remaining part of the access network, where the remaining part of the access network may include an IP network.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in the following in a broad sense, or may be replaced with the following names, such as a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (motor slide retainer, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a radiofrequency head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication unit, a modem, or a chip that is disposed in the foregoing device or apparatus. The base station may alternatively be a mobile switching center, a device that functions as a base station in D2D, V2X, and M2M communication, a network side device in a 6G network, a device that functions as a base station in a future communication system, or the like. The base station may support networks of a same access technology or different access technologies. Neither of a specific technology and a specific device form used by the network device is not limited in embodiments of this application.

The base station may be fixed or mobile. For example, a helicopter or an uncrewed aerial vehicle may be configured as a mobile base station, and one or more cells may move based on a location of the mobile base station. In another example, the helicopter or the uncrewed aerial vehicle may be configured as a device configured to communicate with another base station.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. The information at the RRC layer is finally changed into the information at the PHY layer, or is changed from the information at the PHY layer. Therefore, in this architecture, the higher layer signaling such as the RRC layer signaling may also be considered to be sent by the DU, or by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. These small cells feature small coverage and low transmit power, and are applicable to providing a high-speed data transmission service.

In this application, an apparatus configured to implement a function of the access network device may be the access network device, or may be an apparatus that can support the access network device in implementing the function, for example, a chip system, a hardware circuit, a software unit, or a combination of the hardware circuit and the software unit. The apparatus may be mounted in the access network device or may be used together with the access network device. In the technical solutions provided in this application, an example in which the apparatus configured to implement the function of the access network device is the access network device and the access network device is the base station is used to describe the technical solutions provided in this application.

In this embodiment of this application, one network device may include one or more cells, and each cell includes one or more transmission reception points (transmission reception points, TRPs) or transmission points (transmission points, TPs).

Optionally, in this embodiment of this application, the network device may further communicate with a core network device.

The network device and the terminal device may be deployed on land, including an indoor or outdoor device, a handheld device, or a vehicle-mounted device; may be deployed on a water surface; or may be deployed on an airplane, a balloon, and a satellite in air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

Security is a highly valuable feature of cellular networks. Especially with evolution of the cellular networks to 2B services, communication security not only affects user data security, but also has great impact on normal industrial production. Therefore, security technologies evolve along with cellular network evolution. In a cellular network, an initial access procedure (or referred to as a random access procedure) is a mandatory process for a terminal device to access a network to obtain a service. Because a core network-based key derivation mechanism is used in the cellular network, in the random access procedure of the terminal device, the terminal device and a network device cannot obtain aligned keys for protection of the random access procedure. However, some current attacks are accordingly launched to the random access procedure of the terminal device, affecting security of the terminal device and even the network. Therefore, how to resolve a security protection problem in the random access procedure is an issue with key considerations in cellular network evolution.

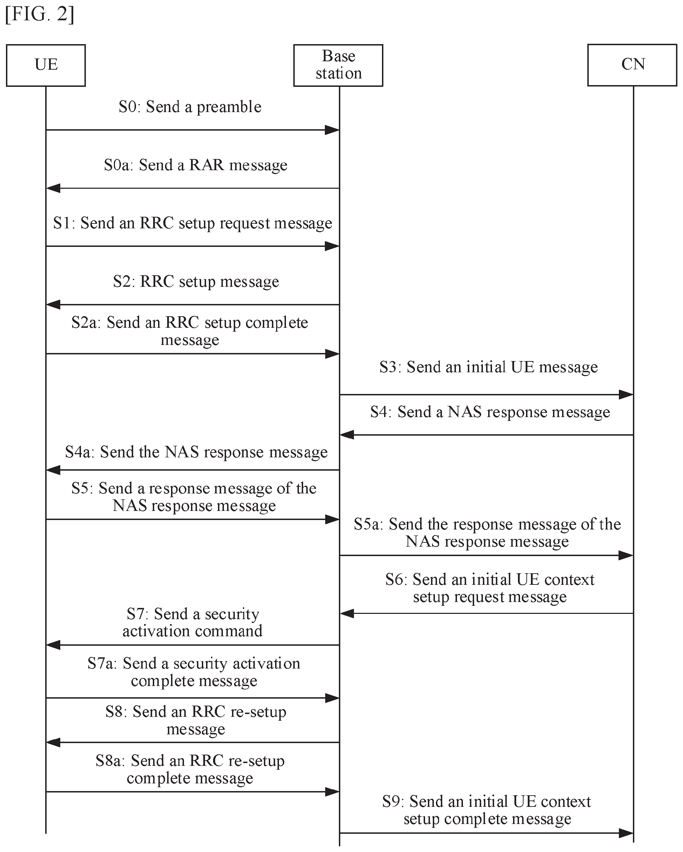

For ease of description, a process including a random access procedure and security activation in a current cellular network is described below with reference to FIG. 2.

FIG. 2 is a schematic flowchart of a random access procedure and secure activation in a current cellular network. As shown in FIG. 2, the process includes steps 0 to 9. The following separately describes steps 0 to 9 in detail.

It should be understood that FIG. 2 is described by using an example in which the terminal device is UE, the network device is a base station, and the core network device is a core network (core network, CN).

Step 0: The UE in RRC_IDLE and CM_IDLE sends, to the base station, a preamble (preamble) of an access channel, to initiate a random access procedure.

Step 0a: The UE in RRC_IDLE and CM_IDLE receives a random access response (random access response, RAR) message from the base station, where the RAR message includes information such as a timing advance (timing advance, TA) and a UL-grant.

Step 1: The UE in RRC_IDLE and CM_IDLE sends a radio resource control setup request (radio resource control, RRC setup request) message to the base station by using the TA and the UL-grant included in the RAR message.

Step 2: After receiving the RRC setup request message, if the base station agrees to an RRC setup request, the base station returns an RRC setup (RRC setup) message to the UE in RRC_IDLE and CM_IDLE, where the RRC setup message includes a signaling radio bearer (signaling radio bearer, SRB0) configuration, a physical layer configuration parameter, and a media access control (media access control, MAC) configuration parameter.

Step 2a: After receiving an RRC setup parameter, the UE in RRC_IDLE and CM_IDLE enters RRC_CONNECTED, and sends an RRC setup complete (RRC setup complete) message to the base station, where the message includes a non-access stratum (non-access stratum, NAS) message sent by the UE to an AMF, for example, a registration request message, based on other information used by the base station to select a core network.

Step 3: The base station sends an initial UE message (initial UE message) to the CN, including the NAS message sent by the UE to the base station in step 2a.

Steps 4 and 4a: After processing the NAS message received from the base station, the CN sends some NAS response messages to the UE through the base station.

Steps 5 and 5a: After receiving the NAS response message from the CN, the UE continues to respond to the message, and then sends a response message of the NAS response message to the CN through the base station.

Step 6: After receiving the response message of the NAS response message in step 5a, the CN performs related check and processing. For a registration process, authentication and authentication between the UE and the network can be completed through exchange of the NAS message in steps 2a, 3, 4, and 5. Then, the CN sends an initial UE context setup request message to the base station, where the initial UE context setup request message includes key information used for secure communication of the UE, a security algorithm (an encryption algorithm, an integrity protection algorithm, referred to as an integrity algorithm for short, and the like) supported by the network side, and a radio capability of the UE.

Steps 7 and 7a: The base station sends a security activation command to the UE; and the UE checks the message after receiving the command, and if the check is successful, the UE derives keys for encryption and integrity protection of signaling and data, where the keys are used for subsequent signaling and data transmission protection. The UE further sends a security activation complete message to the base station, to notify the base station that air interface security has been activated.

Steps 8 and 8a: The base station may reconfigure an air interface transmission parameter, where a reconfiguration message and a reconfiguration complete message are respectively protected by encryption and integrity protection of the base station and the UE.

Step 9: The base station sends an initial UE context setup complete message to the CN. In this case, the entire initial link setup process ends, and security protection is provided for subsequent data and signaling transmission between the UE and the base station.

In the foregoing process including the random access procedure and the security activation, the UE and the base station can align security keys only after step 7 and step 8, where the keys are used to protect signaling and data transmission after step 7 and step 8. However, before step 7 and step 8, no protection is provided for the messages sent between the UE and the base station, and the messages are vulnerable to attacks.

In view of this, embodiments of this application provide a data transmission method. According to the method, security protection can be performed on data transmitted in a random access procedure.

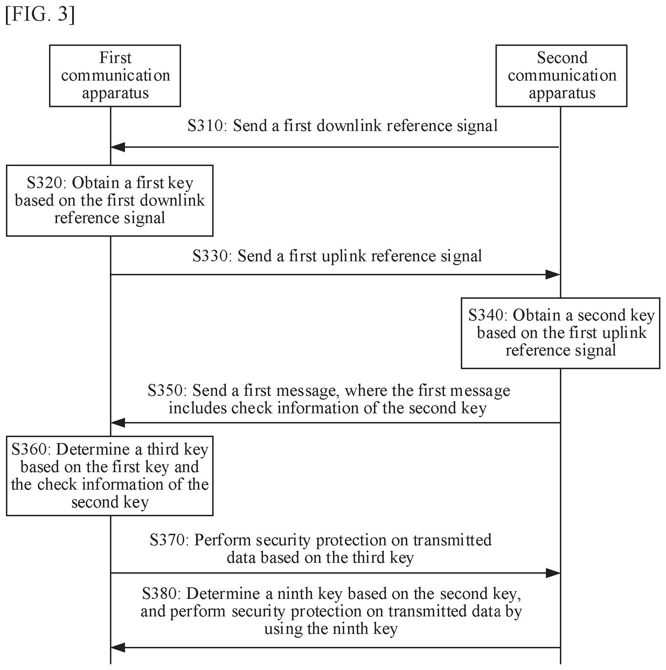

FIG. 3 is a schematic flowchart of a data transmission method according to an embodiment of this application. As shown in FIG. 3, the method may include steps 310 to 380. The following separately describes steps 310 to 380 in detail.

Step 310: A first communication apparatus receives a first downlink reference signal sent by a second communication apparatus.

The first communication apparatus is a chip of a terminal device, for example, a baseband chip. That the first communication apparatus receives the first downlink reference signal sent by the second communication apparatus may be that the baseband chip of the terminal device receives the first downlink reference signal sent by the second communication apparatus, that is, the first downlink reference signal is used as an input of the baseband chip of the terminal device.

Step 320: The first communication apparatus obtains a first key based on the first downlink reference signal.

In this embodiment of this application, after receiving the first downlink reference signal sent by the second communication apparatus, the first communication apparatus may obtain the first key based on the first downlink reference signal.

In this embodiment of this application, before step 320, the first communication apparatus further receives system information broadcast by the second communication apparatus. The system information includes but is not limited to measurement configuration information and quantization configuration information. For example, the measurement configuration information may include but is not limited to: a specific channel feature used for channel key generation, for example, channel state information (channel state information, CSI), really simple syndication (really simple syndication, RSS), and an angle. The quantization configuration information may include but is not limited to: a manner combination of measurement results on different resource elements (resource element, RE) or resource blocks (resource block, RB), a quantity of bits generated at a time, a method/threshold for discarding bits during quantization (where different values may be configured based on different signal-to-noise ratios), and the like. For example, the foregoing combination manner may include but is not limited to: separately generating, or combining and then generating, or independently generating and then combining.

Optionally, the system information further includes reference signal configuration information, information negotiation configuration information, privacy amplification configuration information, and the like. For example, the reference signal configuration information may include but is not limited to: configuration information (including information such as a time domain position and a frequency domain position) of a downlink reference signal, configuration information of an uplink reference signal, configuration information of a preamble (preamble), a time constraint, and the like. There is a pairing relationship between the uplink reference signal and the downlink signal, and there is a correspondence between the preamble and the uplink reference signal. The information negotiation configuration information may include but is not limited to a quantity of check bits, and the like. The privacy amplification configuration information may include but is not limited to: a quantity of bits of a HASH operation, and the like.

In an implementation, the first communication apparatus measures the first downlink reference signal based on the received measurement configuration information, to obtain a measurement result of the first downlink reference signal, and quantizes the measurement result of the first downlink reference signal based on the received quantization configuration information, to obtain the first key.

Step 330: The first communication apparatus sends a first uplink reference signal to the second communication apparatus.

Optionally, the first communication apparatus may further send a preamble to the second communication apparatus when sending the first uplink reference signal to the second communication apparatus.

Step 340: The second communication apparatus obtains a second key based on the first uplink reference signal.

In this embodiment of this application, after receiving the first uplink reference signal sent by the first communication apparatus, the second communication apparatus may further obtain the second key based on the first uplink reference signal.

In an implementation, the second communication apparatus measures the first uplink reference signal based on the measurement configuration information, to obtain a measurement result of the first uplink reference signal, and quantizes the measurement result of the first uplink reference signal based on the quantization configuration information, to obtain the second key.

Step 350: The first communication apparatus receives a first message sent by the second communication apparatus, where the first message includes check information of the second key.

In this embodiment of this application, after obtaining the second key, the second communication apparatus may generate the check information of the second key based on the second key, and send the check information of the second key to the first communication apparatus by using the first message.

The check information of the second key is generated in a plurality of manners. This is not specifically limited in this embodiment of this application. In a possible implementation, the second key may be used as an input to perform an operation to obtain a result, where the result may be used as the check information of the second key, for example, cyclic redundancy check.

It should be understood that a quantity of bits of the check information of the second key generated by the second communication apparatus may be determined based on the information negotiation configuration information broadcast by the second communication apparatus to the first communication apparatus.

In an example, the first message is a RAR message.

Step 360: The first communication apparatus determines a third key based on the first key and the check information of the second key.

There are a plurality of implementations in which the first communication apparatus determines the third key based on the first key and the check information of the second key. This is not specifically limited in this embodiment of this application. The following describes several possible implementations.

Example 1: The first communication apparatus determines, based on the first key and the check information of the second key, that the first key and the second key are aligned, and determines the first key as the third key.

It should be understood that the first communication apparatus may generate check information of the first key based on the first key. If the check information of the first key is the same as the check information of the second key, it may be determined that the first key and the second key are aligned. In a possible implementation, the first communication apparatus uses the first key as an input, and performs an operation (the same as the operation performed by the second communication apparatus to obtain the check information of the second key) to obtain a result, where the result may be used as the check information of the first key.

It should be further understood that alignment of the first key and the second key may be understood as that the first key is the same as or consistent with the second key.

Example 2: The first communication apparatus determines, based on the first key and the check information of the second key, that the first key and the second key are aligned, performs calculation on the first key to obtain a fourth key, and determines the fourth key as the third key.

It should be further understood that an algorithm used to perform calculation on the first key is not specifically limited in this application, and any algorithm that can implement privacy amplification on the first key may be used. In an implementation, the algorithm is a hash algorithm.

In an example, during specific implementation, a privacy amplification manner is to ensure that a length of the third key is less than or equal to a length of the first key minus the quantity of bits of the check information in the first message.

Example 3: The first communication apparatus determines, based on the first key and the check information of the second key, that the first key and the second key are not aligned, re-determines a fifth key, and determines the third key based on the fifth key and check information of a sixth key.

In other words, the first communication apparatus determines, based on the first key and the check information of the second key, that the first key and the second key are not aligned; and the first communication apparatus re-sends a second uplink reference signal to the second communication apparatus on a resource indicated by the first message, receives a second downlink reference signal re-sent by the second communication apparatus, and obtains the fifth key based on the second downlink reference signal. The first communication apparatus further receives the check information of the sixth key sent by the second communication apparatus, where the sixth key is obtained by the second communication apparatus based on the received second uplink reference signal. The first communication apparatus determines the third key based on the fifth key and the check information of the sixth key.

For a process in which the first communication apparatus determines the third key based on the fifth key and the check information of the sixth key, refer to the process of determining the third key based on the first key and the check information of the third key. For example, if it is determined, based on the fifth key and the check information of the sixth key, that the fifth key and the sixth key are aligned, the fifth key is determined as the third key; or calculation is performed on the fifth key to obtain an eleventh key, and the eleventh key is determined as the third key. For details, refer to the foregoing process of determining the third key based on the first key and the check information of the third key. Details are not described herein again.

It should be understood that non-alignment of the first key and the second key may be understood as that the first key is different from or inconsistent with the second key.

Example 4: The first communication apparatus determines, based on the first key and the check information of the second key, that the first key and the second key are not aligned; and the first communication apparatus decodes the first key based on a first RV of a first encoding matrix received from the second communication apparatus to obtain a seventh key, and determines the third key based on the seventh key and the check information of the second key.

It should be understood that the first encoding matrix is determined by the second communication apparatus based on the second key.

For example, the first communication apparatus determines, based on the seventh key and the check information of the second key, that the seventh key and the second key are aligned, and determines the seventh key as the third key.

For another example, the first communication apparatus determines, based on the seventh key and the check information of the second key, that the seventh key and the second key are not aligned, and further requests a second RV of the first encoding matrix from the second communication apparatus, decodes the first key based on the first RV and the second RV of the first encoding matrix to obtain an eighth key, and determines the third key based on the eighth key and the check information of the second key.

It should be understood that a process in which the first communication apparatus determines the third key based on the eighth key and the check information of the second key is the same as the process in which the first communication apparatus determines the third key based on the seventh key and the check information of the second key. For example, if determining, based on the eighth key and the check information of the second key, that the eighth key and the second key are aligned, the first communication apparatus determines the eighth key as the third key. For another example, if the first communication apparatus determines, based on the eighth key and the check information of the second key, that the eighth key and the second key are not aligned, the first communication apparatus re-requests another RV of the first encoding matrix from the second communication apparatus, and repeats the foregoing process.

In Example 4, if a quantity of times that the first communication apparatus requests the RV of the first encoding matrix from the second communication apparatus reaches a maximum quantity of request times, the process may return to Example 3, to be specific, the first communication apparatus and the second communication apparatus separately redetermine keys based on new reference signals; and then the third key is determined according to the method in Example 3.

Step 370: The first communication apparatus performs, based on the third key, security protection on data transmitted between the first communication apparatus and the second communication apparatus.

It should be understood that the data transmitted between the first communication apparatus and the second communication apparatus may include data, signaling, and the like transmitted between the first and second communication apparatuses.

It should be understood that the security protection may include but is not limited to: performing encryption and/or integrity protection on the data transmitted between the first communication apparatus and the second communication apparatus.

It should be noted that an execution sequence of steps 310 to 370 is not specifically limited in this embodiment of this application.

In the foregoing technical solution, the first communication apparatus negotiates an aligned key with the second communication apparatus in a random access procedure, and performs, by using the aligned key, security protection on data transmitted between the first communication apparatus and the second communication apparatus. In this way, the random access procedure can be protected, an attacker is prevented from attacking the random access procedure of the first communication apparatus, and security of the first communication apparatus and even the second communication apparatus is protected.

Step 380: The second communication apparatus determines a ninth key based on the second key, and performs, based on the ninth key, security protection on data transmitted between the second communication apparatus and the first communication apparatus.

In this embodiment of this application, a method for determining the ninth key by the second communication apparatus based on the second key is similar to the method for determining the third key by the first communication apparatus based on the first key. In an example, if the first key and the second key are aligned, the second communication apparatus determines the second key as the ninth key. In another example, if the first key and the second key are aligned, the second communication apparatus performs calculation on the second key to obtain a tenth key, and determines the tenth key as the ninth key. In another example, if the first key and the second key are not aligned, the second communication apparatus determines the sixth key based on the second uplink reference signal sent by the first communication apparatus; and if the sixth key and the fifth key that is determined by the first communication apparatus based on the second downlink reference signal are aligned, the second communication apparatus may determine the sixth key as the ninth key, or perform calculation on the sixth key to obtain a twelfth key, and determine the twelfth key as the ninth key.

In this embodiment of this application, after determining the third key aligned with the ninth key, the first communication apparatus sends a message, for example, Msg3, to the second communication apparatus. After receiving the message, the second communication apparatus may determine, based on the message, that the ninth key determined by the second communication apparatus and the third key determined by the first communication apparatus are aligned. In this case, the second communication apparatus may perform, based on the ninth key, security protection on the data transmitted between the second communication apparatus and the first communication apparatus.

It should be understood that the security protection may include but is not limited to: performing encryption and/or integrity protection on the data transmitted between the second communication apparatus and the first communication apparatus.

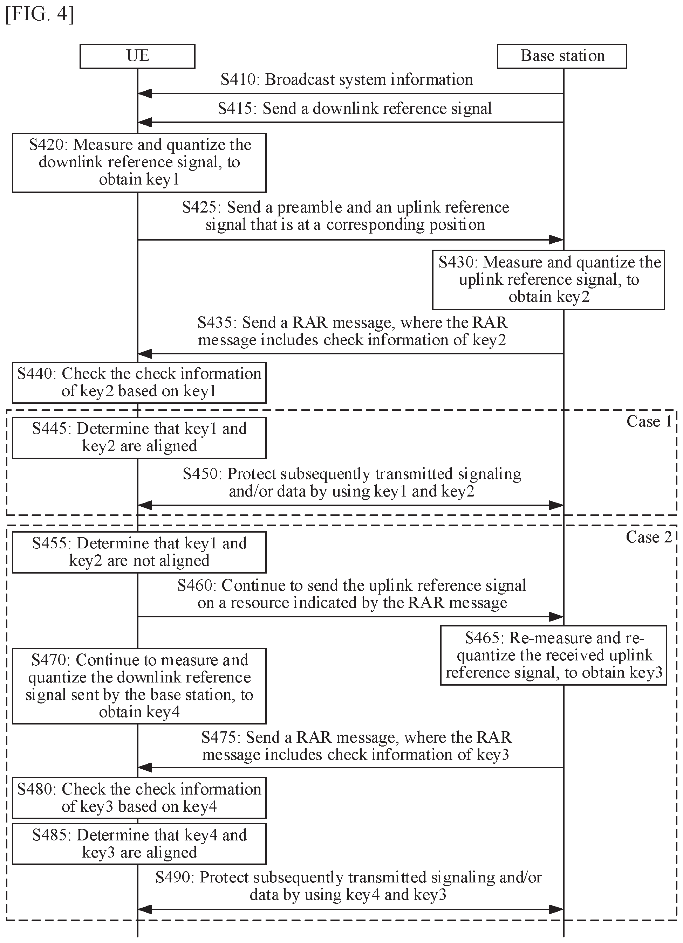

With reference to FIG. 4, the following describes in detail a specific implementation process of the data transmission method provided in embodiments of this application. It should be understood that an example in FIG. 4 is merely intended to help a person skilled in the art understand embodiments of this application, but is not intended to limit embodiments of this application to a specific value or a specific scenario in the example shown in FIG. 4. It is clear that a person skilled in the art may make various equivalent modifications or changes based on the following example provided in FIG. 4, and such modifications and changes also fall within the scope of embodiments of this application.

FIG. 4 is a schematic flowchart of another data transmission method according to an embodiment of this application. As shown in FIG. 4, the method may include steps 410 to 490. The following separately describes steps 410 to 490 in detail.

It should be understood that, for ease of description, in FIG. 4, an example in which a first communication apparatus is UE and a second communication apparatus is a base station is used for description.

Step 410: The base station broadcasts system information, where the system message includes configuration information related to secure random access.

In this embodiment of this application, the base station may broadcast the system information to another device in a network, where the system message includes the configuration information related to the secure random access procedure. In an example, the configuration information related to the secure random access procedure is used to generate a symmetric key or an aligned key between the base station and the UE in the random access procedure.

In the foregoing technical solution, the base station may send a new key generation configuration message to the UE by using the system information, so that the UE and the base station can subsequently align key generation parameters.

For example, the configuration information related to the secure random access procedure may include but is not limited to: reference signal configuration information, measurement configuration information, quantization configuration information, information negotiation configuration information, privacy amplification configuration information, and the like. For specific descriptions of the configuration information, refer to the descriptions in step 320. Details are not described herein again.

Step 415: The base station sends a downlink reference signal (downlink reference signal, DL reference signal) to the UE.

Step 420: The UE receives the downlink reference signal sent by the base station, and measures and quantizes the downlink reference signal based on the system information broadcast by the base station, to obtain a key *key*1.

In this embodiment of this application, the base station may send the downlink reference signal to the UE. After receiving the downlink reference signal sent by the base station, the UE may measure the downlink reference signal based on the measurement configuration information in the system information broadcast by the base station, and may quantize a measurement result based on the quantization configuration information in the system information broadcast by the base station, to obtain the key *key*1. Specifically, the UE may quantize the measurement result into a bit stream including 0s and 1s, where the bit stream including 0s and 1s forms the foregoing key *key*1.

Time at which the UE measures and quantizes the downlink reference signal based on the system information broadcast by the base station to obtain the key *key*1 is not specifically limited in this embodiment of this application. In an example, the UE may measure and quantize the received downlink reference signal within a period of time before initiating a random access procedure (for example, sending a preamble) to the base station, to obtain the key *key*1. In another example, the UE may alternatively measure and quantize the received downlink reference signal at a latest time point before initiating a random access procedure (for example, sending a preamble) to the base station, to obtain the key *key*1. In this way, accuracy of measurement and quantization can be improved.

Step 425: The UE sends, to the base station, a preamble and an uplink reference signal (uplink reference signal, UL reference signal) that is at a corresponding position based on the system information broadcast by the base station.

In this embodiment of this application, the UE may send, to the base station, the uplink reference signal at the corresponding position and the preamble (preamble) based on the reference signal configuration information in the system information broadcast by the base station.

In the foregoing technical solution, the UE may send the uplink reference signal and the preamble together, so that the base station can measure the uplink reference signal after estimating a TA by using the preamble, and a result of measuring the uplink reference signal by the base station is more accurate.

Step 430: The base station measures and quantizes the received uplink reference signal, to obtain a key *key*2.

In this embodiment of this application, after receiving the uplink reference signal at the corresponding position and the preamble that are sent by the UE, the base station may measure and quantize the uplink reference signal, to obtain the key *key*2. It should be understood that a method for obtaining the key *key*2 by the base station is similar to the method for obtaining the key *key*1 by the UE. Specifically, the base station may measure the uplink reference signal based on the broadcast measurement configuration information, and may further quantize a measurement result based on the broadcast quantization configuration information, to obtain the key *key*2.

Step 435: The base station sends a RAR message to the UE, where the RAR message may include check information of the key *key*2.

In this embodiment of this application, after obtaining the foregoing key *key*2, the base station may calculate the check information of the key *key*2, include the check information of *key*2 in the RAR message, and send the RAR message to the UE.

The check information of the key *key*2 is generated in a plurality of manners. This is not specifically limited in this embodiment of this application. In a possible implementation, *key*2 may be used as an input to perform an operation to obtain a result, where the result may be used as the check information of *key*2. It should be understood that a quantity of bits of the check information of *key*2 generated by the base station may be determined based on the information negotiation configuration information broadcast by the base station.

For example, cyclic redundancy check (cyclic redundancy check, CRC) may be used as the check information of *key*2.

In the foregoing technical solution, the base station may include the check information of the key *key*2 in the RAR message, so that no new dedicated information reconciliation message needs to be added, thereby reducing a delay and overheads of a system.

Step 440: The UE checks the check information of the key *key*2 based on the key *key*1.

In this embodiment of this application, after receiving the check information of the key *key*2 sent by the base station, the UE checks the received check information of the key *key*2 based on the key *key*1 generated by the UE. Specifically, in a possible implementation, according to the method for generating the check information of *key*2 by the base station in step 435, the UE may use *key*1 as an input, to perform an operation to obtain a result, where the result may be used as check information of *key*1, and the UE may determine whether the check information of *key*1 is the same as the check information of *key*2. If the check information of *key*1 is the same as the check information of *key*2 , it may be understood that the check information of *key*2 passes the check by the UE. If the check information of *key*1 is not completely the same as the check information of *key*2, it may be understood that the check information of *key*2 does not pass the check by the UE.

It should be understood that a quantity of bits of the check information of *key*1 generated by the UE is the same as the quantity of bits of the check information of *key*2. Specifically, the UE may determine the quantity of bits of the check information of *key*1 based on the information negotiation configuration information broadcast by the base station.

In an example, the UE may further determine, depending on whether the check information of *key*2 passes the check, whether the key *key*1 generated by the UE and the key *key*2 generated by the base station are aligned. The following separately provides descriptions by using Case 1 and Case 2.

### Case 1 (step 445 and step 450):

Step 445: The UE determines that the key *key*1 and the key *key*2 are aligned.

In an example, if the check information of *key*1 is the same as the check information of *key*2 , the check information of *key*2 passes the check by the UE, and the UE may determine that the key *key*1 and the key *key*2 are aligned.

Step 450: The UE and the base station may perform encryption and/or integrity protection on subsequently transmitted signaling or data by using *key*1 and *key*2 that are aligned.

In an example, if the UE determines that the key *key*1 and the key *key*2 are aligned, the UE may use *key*1 to perform encryption and/or integrity protection on signaling and/or data in subsequent uplink transmission. Similarly, the base station may also use *key*2 to perform encryption and/or integrity protection on signaling and/or data in subsequent downlink transmission.

It should be understood that the signaling and/or data in the subsequent uplink transmission may be signaling and/or data in uplink transmission in a random access procedure (for example, steps 1 to 7 in FIG. 2), or may be signaling and/or data in uplink transmission in another procedure. The signaling and/or data in the subsequent downlink transmission may be signaling and/or data in downlink transmission in the random access procedure (for example, steps 1 to 7 in FIG. 2), or may be signaling and/or data in downlink transmission in another procedure. This is not specifically limited in this embodiment of this application.

Optionally, because no security protection is provided for the check information of *key*2 sent by the base station to the UE, once the check information is used by an unauthorized person, *key*2 may be unavailable. In some embodiments, to prevent the check information of *key*2 sent by the base station from being obtained by another unauthorized person, the base station may further perform a hash operation on *key*2 based on a quantity of bits of a HASH operation in the privacy amplification configuration information broadcast by the base station, to obtain *key*2⁽¹⁾ that indicates the quantity of bits, and use *key*2⁽¹⁾ to perform encryption and/or integrity protection on signaling and/or data in subsequent downlink transmission. Similarly, the UE may also perform a hash operation on *key*1 based on a quantity of bits of a HASH operation in the privacy amplification configuration information broadcast by the base station, to obtain *key*1⁽¹⁾ that indicates the quantity of bits, and use *key*1⁽¹⁾ to perform encryption and/or integrity protection on signaling and/or data in subsequent uplink transmission.

It should be understood that *key*1⁽¹⁾ indicates that a hash operation is performed on *key*1 based on *key*1, to obtain *key*1⁽¹⁾. *key*2⁽¹⁾ indicates that a hash operation is performed on *key*2 based on *key*2, to obtain *key*2⁽¹⁾.

### Case 2 (step 455 to step 490):

Step 455: The UE determines that the key *key*1 and the key *key*2 are not aligned.

In an example, if the check information of *key*1 is different from or not completely the same as the check information of *key*2, indicating that the check information of *key*2 does not pass the check by the UE, the UE may determine that the key *key*1 and the key *key*2 are not aligned.

Step 460: The UE continues to send the uplink reference signal on a resource indicated by the RAR message.

In this embodiment of this application, after determining that the key *key*1 and the key *key*2 are not aligned, the UE may re-send the uplink reference signal on the resource indicated by the RAR message. In this way, the UE can be prevented from sending the preamble and the uplink reference signal again from step 425. This reduces a delay in an access procedure.

Step 465: The base station measures and quantizes the re-received uplink reference signal, to obtain a key *key*3.

In this embodiment of this application, after receiving the uplink reference signal re-sent by the UE on the resource indicated by the RAR message, the base station may measure and quantize the re-received uplink reference signal, to obtain the key *key*3. It should be understood that a process of determining the key *key*3 is similar to the process of determining *key*2 in step 430. For details, refer to the descriptions in step 430. The details are not described herein again.

Step 470: The UE continues to measure and quantize the downlink reference signal sent by the base station, to obtain a key *key*4.

In this embodiment of this application, the base station periodically sends the downlink reference signal to the UE, and the UE may continue to measure and quantize the downlink reference signal sent by the base station, to obtain the key *key*4.

Step 475: The base station sends a RAR message to the UE, where the RAR message may include check information of the key *key*3.

Step 480: The UE checks the check information of the key *key*3 based on the key *key*4.

It should be understood that step 480 corresponds to step 440. For details, refer to the descriptions in step 440. The details are not described herein again.

Step 485: The UE determines that the key *key*4 and the key *key*3 are aligned.

It should be understood that step 485 corresponds to step 445. For details, refer to the descriptions in step 445. The details are not described herein again.

Step 490: The UE and the base station may perform encryption and/or integrity protection on subsequently transmitted signaling or data by using *key*4 and *key*3 that are aligned.

It should be understood that step 490 corresponds to step 450. For details, refer to the descriptions in step 450. The details are not described herein again.

Optionally, because no security protection is provided for the check information of *key*3 sent by the base station to the UE, once the check information is used by an unauthorized person, *key*3 may be unavailable. In some embodiments, to prevent the check information of *key*3 sent by the base station from being obtained by another unauthorized person, the base station may further perform a hash operation on *key*3 based on a quantity of bits of a HASH operation in the privacy amplification configuration information broadcast by the base station, to obtain *key*3⁽¹⁾ that indicates the quantity of bits, and use *key*3⁽¹⁾ to perform encryption and/or integrity protection on signaling and/or data in subsequent downlink transmission. Similarly, the UE may also perform a hash operation on *key*4 based on a quantity of bits of a HASH operation in the privacy amplification configuration information broadcast by the base station, to obtain *key*4⁽¹⁾ that indicates the quantity of bits, and use *key*4⁽¹⁾ to perform encryption and/or integrity protection on signaling and/or data in subsequent uplink transmission.

It should be understood that *key*3⁽¹⁾ indicates that a hash operation is performed on *key*3 based on *key*3*,* to obtain *key*3⁽¹⁾*. key*4⁽¹⁾ indicates that a hash operation is performed on *key4* based on *key4,* to obtain *key*4⁽¹⁾*.*

It should be noted that, if a result of checking, by the UE, the check information of the key *key3* based on the key *key4* in step 480 is that *key4* and *key3* are not aligned, the UE and the base station may continue to repeatedly perform steps 460 to 490 until the UE and the base station determine aligned keys.

Optionally, the base station further sets a limit on a maximum quantity of times, and if a quantity of retries exceeds the maximum quantity of times, the base station falls back to a common RACH, or reselects another cell.

In the foregoing technical solution, measurement and quantization on uplink and downlink signals by the UE and the base station are enhanced in the random access procedure, to separately obtain working keys, and then encryption and integrity protection are performed on signaling and/or data in the random access procedure, thereby implementing secure random access of the UE and preventing an attacker from attacking the random access procedure.

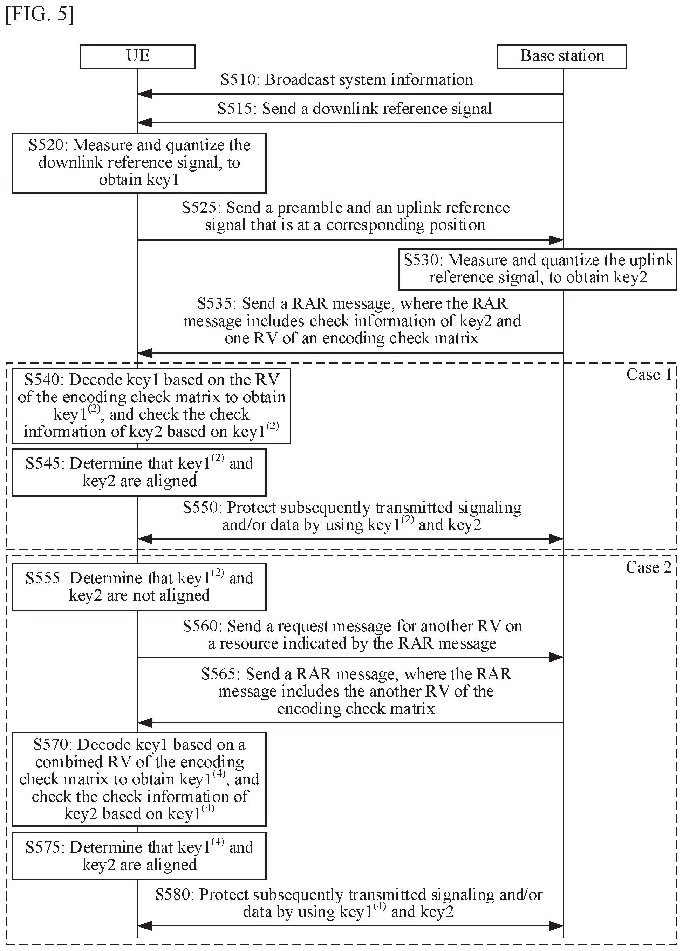

With reference to FIG. 5, the following describes in detail another specific implementation process of the data transmission method provided in embodiments of this application. It should be understood that an example in FIG. 5 is merely intended to help a person skilled in the art understand embodiments of this application, but is not intended to limit embodiments of this application to a specific value or specific scenario in the example in FIG. 5. It is clear that a person skilled in the art may make various equivalent modifications or changes based on the following example provided in FIG. 5, and such modifications and changes also fall within the scope of embodiments of this application.

FIG. 5 is a schematic flowchart of another data transmission method according to an embodiment of this application. As shown in FIG. 5, the method may include steps 510 to 580. The following separately describes steps 510 to 580 in detail.

It should be understood that, for ease of description, in FIG. 5, an example in which a first communication apparatus is UE and a second communication apparatus is a base station is used for description.

Step 510: The base station broadcasts system information, where the system message includes configuration information related to secure random access.

For example, the configuration information related to the secure random access may include but is not limited to: reference signal configuration information, measurement configuration information, quantization configuration information, information negotiation configuration information, privacy amplification configuration information, and the like. The information negotiation configuration information may include but is not limited to: a quantity of check bits, an encoding method (for example, low density parity check code (low density parity check code, LDPC), Polar, or another encoding mode) used for negotiation information, whether a check bit of a plurality of RV versions is supported, a total quantity of RV versions, and the like.

It should be understood that the foregoing other configuration information (for example, the reference signal configuration information, the measurement configuration information, the quantization configuration information, and the privacy amplification configuration information) is the same as the configuration in step 410. For specific descriptions of the configuration information, refer to the descriptions in step 410. Details are not described herein again.

Step 515: The base station sends a downlink reference signal to the UE.

Step 520: The UE receives the downlink reference signal sent by the base station, and measures and quantizes the downlink reference signal based on the system information broadcast by the base station, to obtain a key *key*1.

Step 525: The UE sends, to the base station, a preamble and an uplink reference signal that is at a corresponding position based on the system information broadcast by the base station.

Step 530: The base station measures and quantizes the received uplink reference signal, to obtain a key *key*2.

Step 535: The base station sends a RAR message to the UE, where the RAR message may include check information of the key *key*2 and one redundancy version (redundancy version, RV) of an encoding check matrix.

It should be understood that the check information, included in the RAR message, of the key *key*2 sent by the base station to the UE in step 535 is the same as the check information of the key *key*2 in step 435. For details, refer to the descriptions in step 435. The details are not described herein again.

In step 535, in addition to sending the check information of the key *key*2 to the UE by using the RAR message, the base station further sends the RV of the encoding check matrix. The encoding check matrix may be determined based on the key *key*2 generated by the base station, and is used to perform error correction on the key *key*1 generated by the UE, so that the key *key*1 generated by the UE and *key*2 generated by the base station can be aligned. In this embodiment of this application, because the encoding check matrix is large, to reduce high signaling overheads caused by transmitting the encoding check matrix, the base station may send one RV version of the encoding check matrix to the UE by using the RAR message. The RV version of the encoding check matrix may be understood as a part of the encoding check matrix.

In the foregoing technical solution, an encoding information mechanism of different RVs is introduced, so that encoding information (for example, an encoding check matrix) can be applied for one by one, thereby avoiding high signaling overheads caused by delivering the entire encoding information.

Step 540: The UE decodes the key *key*1 based on the RV version of the encoding check matrix, to obtain *key*1⁽¹⁾ , and checks the check information of the key *key*2 based on *key*1⁽²⁾.

In this embodiment of this application, after receiving the RV version of the encoding check matrix sent by the base station, the UE may decode, based on the RV version of the encoding check matrix, the key *key*1 generated by the UE, to obtain *key*1⁽²⁾. The UE may further check the check information of the key *key2* based on *key*1⁽²⁾, to determine whether the key *key*1⁽²⁾ obtained by the UE and the key *key2* generated by the base station are aligned. The following separately provides descriptions by using Case 1 and Case 2.

It should be understood that a process in which the UE checks the check information of the key *key2* based on *key*1⁽²⁾ is similar to that in step 440 in which the UE checks the check information of the key *key2* based on *key*1*.* For details, refer to the descriptions in step 440. The details are not described herein again.

It should be understood that *key*1⁽²⁾ indicates that *key*1 is decoded based on *key*1*,* to obtain *key*1⁽²⁾*.*

### Case 1 (step 545 and step 550):

Step 545: The UE determines that the key *key*1⁽²⁾ and the key *key2* are aligned.

In an example, if check information of *key*1⁽²⁾ is the same as the check information of *key2 ,* the check information of *key2* passes the check by the UE, and the UE may determine that the key *key*1⁽²⁾ and the key *key2* are aligned.

Step 550: The UE and the base station may perform encryption and/or integrity protection on subsequently transmitted signaling or data by using *key*1⁽²⁾ and *key2* that are aligned.

In an example, if the UE determines that the key *key*1⁽²⁾ and the key *key2* are aligned, the UE may use *key*1⁽²⁾ to perform encryption and/or integrity protection on signaling and/or data in subsequent uplink transmission. Similarly, the base station may also use *key2* to perform encryption and/or integrity protection on signaling and/or data in subsequent downlink transmission.

Optionally, in some embodiments, to prevent the check information of *key2* sent by the base station from being obtained by another unauthorized person, the base station may further perform a hash operation on *key2* based on a quantity of bits of a HASH operation in the privacy amplification configuration information broadcast by the base station, to obtain *key*2⁽¹⁾ that indicates the quantity of bits, and use *key*2⁽¹⁾ to perform encryption and/or integrity protection on signaling and/or data in subsequent downlink transmission. Similarly, the UE may also perform a hash operation on *key*1⁽²⁾ based on a quantity of bits of a HASH operation in the privacy amplification configuration information broadcast by the base station, to obtain *key*1⁽³⁾ that indicates the quantity of bits, and use *key1*⁽³⁾ to perform encryption and/or integrity protection on signaling and/or data in subsequent uplink transmission.

It should be understood that *key*1⁽³⁾ indicates that a hash operation is performed on *key*1⁽²⁾ based on *key*1⁽²⁾*,* to obtain *key*1⁽³⁾*.*

### Case 2 (step 555 to step 580):

Step 555: The UE determines that the key *key*1⁽²⁾ and the key *key2* are not aligned.

In an example, if the check information of *key*1⁽²⁾ is different from or not completely the same as the check information of *key2,* indicating that the check information of *key2* does not pass the check by the UE, the UE may determine that the key *key*1⁽²⁾ and the key *key2* are not aligned.

Step 560: The UE sends a request message for another RV of the encoding check matrix to the base station on the resource indicated by the RAR message.

In this embodiment of this application, after determining that the key *key*1⁽²⁾ and the key *key2* are not aligned, the UE may send the request message for the another RV of the encoding check matrix on the resource indicated by the RAR message. The request message for the another RV of the encoding check matrix is used to request the another RV of the encoding check matrix from the base station.

Step 565: The base station sends a RAR message to the UE, where the RAR message includes the another RV of the encoding check matrix.

In this embodiment of this application, after receiving the request message, sent by the UE, for the another RV of the encoding check matrix, the base station may send the another RV of the encoding check matrix to the UE.

Step 570: The UE combines different RVs of the encoding check matrix, decodes the key *key*1 based on a combined RV to obtain *key*1⁽⁴⁾*,* and checks the check information of the key *key2* based on *key*1⁽⁴⁾*.*

In this embodiment of this application, after receiving the another RV of the encoding check matrix sent by the base station, the UE may combine the RV and the RV of the encoding check matrix received in step 540, decode the key *key*1 based on a combined RV to obtain *key*1⁽⁴⁾*,* and check the check information of the key *key2* based on *key*1⁽⁴⁾*.*

It should be understood that a process in which the UE checks the check information of the key *key2* based on *key*1⁽⁴⁾ is similar to that in step 440 in which the UE checks the check information of the key *key2* based on *key*1. For details, refer to the descriptions in step 440. The details are not described herein again.

Step 575: The UE determines that the key *key*1⁽⁴⁾ and the key *key2* are aligned.

In an example, if check information of *key*1⁽⁴⁾ is the same as the check information of *key2 ,* the check information of *key2* passes the check by the UE, and the UE may determine that the key *key*1⁽⁴⁾ and the key *key2* are aligned.

Step 580: The UE and the base station may perform encryption and/or integrity protection on subsequently transmitted signaling or data by using *key*1⁽⁴⁾ and *key2* that are aligned.

In an example, if the UE determines that the key *key*1⁽⁴⁾ and the key *key2* are aligned, the UE may use *key*1⁽⁴⁾ to perform encryption and/or integrity protection on signaling and/or data in subsequent uplink transmission. Similarly, the base station may also use *key2* to perform encryption and/or integrity protection on signaling and/or data in subsequent downlink transmission.

Optionally, in some embodiments, to prevent the check information of *key2* sent by the base station from being obtained by another unauthorized person, the base station may further perform a hash operation on *key2* based on a quantity of bits of a HASH operation in the privacy amplification configuration information broadcast by the base station, to obtain *key*2⁽¹⁾ that indicates the quantity of bits, and use *key*2⁽¹⁾ to perform encryption and/or integrity protection on signaling and/or data in subsequent downlink transmission. Similarly, the UE may also perform a hash operation on *key*1⁽⁴⁾ based on a quantity of bits of a HASH operation in the privacy amplification configuration information broadcast by the base station, to obtain *key*1⁽⁵⁾ that indicates the quantity of bits, and use *key*1⁽⁵⁾ to perform encryption and/or integrity protection on signaling and/or data in subsequent uplink transmission.

It should be understood that *key*1⁽⁵⁾ indicates that a hash operation is performed on *key*1⁽⁴⁾ based on *key*1⁽⁴⁾*,* to obtain *key*1⁽⁵⁾*.*

Optionally, in some embodiments, if the UE determines that the key *key*1⁽⁴⁾ and the key *key2* are not aligned, the UE and the base station may continue to repeatedly perform steps 560 to 570, and the UE continues to request another RV of the encoding check matrix from the base station until the key determined by the UE and the key determined by the base station are aligned.

It should be noted that, in this embodiment of this application, the base station may further indicate a maximum quantity of RVs in the broadcast system information. If a quantity of other RVs of the encoding check matrix that the UE requests from the base station reaches the maximum quantity of RVs indicated in the system information, the UE cannot continue to request other RVs of the encoding check matrix from the base station, but needs to continue to send an uplink reference signal on the resource indicated by the RAR message. The base station measures and quantifies the re-received uplink reference signal to obtain a new key. The UE continues to measure and quantize a downlink reference signal sent by the base station to obtain a new key. The UE checks the key re-obtained by the base station and the key re-obtained by the UE, to determine whether the key re-obtained by the base station and the key re-obtained by the UE are aligned. That is, when the quantity of other RVs of the encoding check matrix requested by the UE from the base station reaches the maximum quantity of RVs indicated in the system information, the UE needs to repeatedly perform steps 460 to 480 in FIG. 4, until the key determined by the UE and the key determined by the base station are aligned.

In the foregoing technical solution, according to the method shown in FIG. 4, in a key alignment phase, encoding-based information reconciliation may be considered, and different RVs of the encoding check matrix are introduced, thereby improving information reconciliation efficiency.

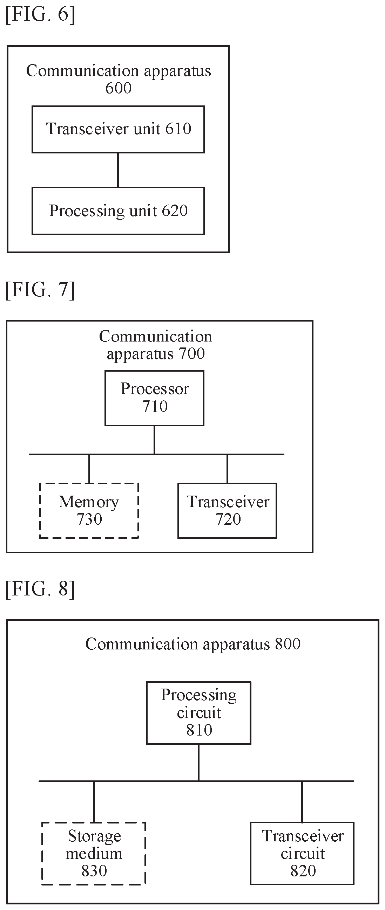

The methods provided in embodiments of this application are described above in detail with reference to FIG. 1 to FIG. 5. Apparatuses provided in embodiments of this application are described below in detail with reference to FIG. 6 to FIG. 8. It should be understood that descriptions of apparatus embodiments correspond to the descriptions of the method embodiments. Therefore, for content that is not described in detail, refer to the foregoing method embodiments. For brevity, details are not described herein.

FIG. 6 is a block diagram of a communication apparatus 600 according to an embodiment of this application. As shown in FIG. 6, an apparatus 600 may include a transceiver unit 610 and a processing unit 620. The transceiver unit 610 may communicate with the outside. For example, the transceiver unit 610 may input externally received data/information to the processing unit. For another example, the transceiver unit 610 may output data/information processed by the processing unit to the outside. The transceiver unit 610 may also be referred to as a communication interface or a communication unit. The processing unit 620 is configured to process data/information, so that a function of the first communication apparatus in the methods shown in FIG. 3 to FIG. 5 is implemented, or a function of the second communication apparatus in the methods shown in FIG. 3 to FIG. 5 is implemented.

In a possible implementation, the apparatus 600 may be the first communication apparatus in the methods shown in FIG. 3 to FIG. 5, or may be a chip configured to implement a function of the first communication apparatus in the methods shown in FIG. 3 to FIG. 5. Specifically, the apparatus 600 may implement a procedure performed by the first communication apparatus in the methods shown in FIG. 3 to FIG. 5. The transceiver unit 610 and the processing unit 620 are configured to perform processing-related operations of the first communication apparatus in the foregoing method procedures.

The transceiver unit 610 is configured to receive a first downlink reference signal, send a first uplink reference signal, and receive a first message, where the first message includes check information of a second key, and the second key is obtained by a second communication apparatus based on the received first uplink reference signal.

The processing unit 620 is configured to obtain a first key based on the first downlink reference signal, determine a third key based on the first key and the check information of the second key, and perform, based on the third key, security protection on data transmitted between the first communication apparatus and the second communication apparatus.

Optionally, when sending the first uplink reference signal, the transceiver unit 610 is further configured to send a preamble.

Optionally, before receiving the first downlink reference signal, the transceiver unit 610 is further configured to receive system information, where the system information includes measurement configuration information and quantization configuration information; and the processing unit 620 is further configured to: measure the first downlink reference signal based on the measurement configuration information, to obtain a measurement result of the first downlink reference signal; and quantize the measurement result of the first downlink reference signal based on the quantization configuration information, to obtain the first key.

Optionally, the processing unit 620 is further configured to: determine, based on the first key and the check information of the second key, that the first key and the second key are aligned, and determine the first key as the third key; or perform calculation on the first key to obtain a fourth key, and determine the fourth key as the third key.

Optionally, the processing unit 620 is further configured to determine, based on the first key and the check information of the second key, that the first key and the second key are not aligned; the transceiver unit 610 is further configured to send a second uplink reference signal on a resource indicated by the first message, and receive a second downlink reference signal; the processing unit 620 is further configured to obtain a fifth key based on the second downlink reference signal; and the transceiver unit 610 is further configured to receive check information of a sixth key, and determine the third key based on the fifth key and the check information of the sixth key.

Optionally, the first message further includes a first redundancy version RV of a first encoding matrix. The processing unit 620 is further configured to decode the first key based on the first RV of the first encoding matrix to obtain a seventh key, and determine the third key based on the seventh key and the check information of the second key.

Optionally, the processing unit 620 is further configured to determine, based on the seventh key and the check information of the second key, that the seventh key and the second key are aligned, and determines the seventh key as the third key.

Optionally, the processing unit 620 is further configured to determine, based on the seventh key and the check information of the second key, that the seventh key and the second key are not aligned; the transceiver unit 610 is further configured to send an RV request message, where the RV request message is used to request a second RV of the first encoding matrix; and the processing unit 620 is further configured to decode the first key based on the first RV and the second RV of the first encoding matrix to obtain an eighth key; and determine, based on the eighth key and the check information of the second key, that the eighth key and the second key are aligned, and determine the eighth key as the third key.

Optionally, the first message is a random access response RAR message.

It should be understood that the processing unit 620 and the transceiver unit 610 may further separately perform any other step, operation, and/or function implemented by the first communication apparatus in the method shown in FIG. 3 to FIG. 5. A specific process of performing the foregoing corresponding step by each unit is described in detail in the foregoing method embodiment. For brevity, details are not described herein again.

In another possible implementation, the apparatus 600 may be the second communication apparatus in the methods shown in FIG. 3 to FIG. 5, or may be a chip configured to implement a function of the second communication apparatus in the methods shown in FIG. 3 to FIG. 5. Specifically, the apparatus 600 may implement a procedure performed by the second communication apparatus in the methods shown in FIG. 3 to FIG. 5. The transceiver unit 610 and the processing unit 620 are configured to perform processing-related operations of the second communication apparatus in the foregoing method procedures.

The transceiver unit 610 is configured to send a first downlink reference signal, receive a first uplink reference signal, and receive a first message, where the first message includes check information of a second key.

The processing unit 620 is configured to obtain the second key based on the first uplink reference signal, determine a ninth key based on the second key, and perform, based on the ninth key, security protection on data transmitted between the second communication apparatus and the first communication apparatus.

Optionally, the transceiver unit 610 is further configured to receive a preamble.

Optionally, the first key and the second key are aligned; and the processing unit 620 is further configured to: determine the second key as the ninth key; or perform calculation on the second key to obtain a tenth key, and determine the tenth key as the ninth key.

Optionally, the first key and the second key are not aligned; the transceiver unit 610 is further configured to send a second downlink reference signal, and receive a second uplink reference signal on a resource indicated by the first message; the processing unit 620 is further configured to obtain a sixth key based on the second uplink reference signal; the transceiver unit 610 is further configured to send check information of the sixth key by using the first message; and the processing unit 620 is further configured to determine the ninth key based on a fifth key and the check information of the sixth key, where the fifth key is obtained by the first communication apparatus based on the second downlink reference signal.

Optionally, the processing unit 620 is further configured to determine a first encoding matrix based on the second key; and the transceiver unit 610 is further configured to send a first redundancy version RV of the first encoding matrix by using the first message.

Optionally, the transceiver unit 610 is further configured to receive an RV request message, where the RV request message is used to request a second RV of the first encoding matrix; and the processing unit 620 is further configured to send the second RV of the first encoding matrix based on the RV request message by using the first message.

It should be understood that the processing unit 620 and the transceiver unit 610 may further separately perform any other step, operation, and/or function implemented by the second communication apparatus in the method shown in FIG. 3 to FIG. 5. A specific process of performing the foregoing corresponding step by each unit is described in detail in the foregoing method embodiment. For brevity, details are not described herein again.

It should be further understood that in any one of the foregoing implementations, the transceiver unit 610 may include a receiving unit and a sending unit. The receiving unit is configured to perform a receiving function in the transceiver unit 610, and the sending unit is configured to perform a sending function in the transceiver unit 610.

The apparatus 600 has a function of implementing a corresponding step performed by the first communication apparatus in the methods shown in FIG. 3 to FIG. 5, or the apparatus 600 has a function of implementing a corresponding step performed by the second communication apparatus in the methods shown in FIG. 3 to FIG. 5. The function may be implemented by hardware, or may be implemented by hardware executing corresponding software. The hardware or the software includes one or more units corresponding to the foregoing functions. For example, the transceiver unit may be replaced by a transceiver machine (for example, the sending unit in the transceiver unit may be replaced by a transmitter machine, and the receiving unit in the transceiver unit may be replaced by a receiver machine), and another unit, for example, the processing unit, may be replaced by a processor, to separately perform sending and receiving operations and related processing operations in the method embodiments.

It should be understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the first communication apparatus in the foregoing embodiment or the chip used in the first communication apparatus, and may be configured to perform a procedure corresponding to the first communication apparatus in the foregoing method embodiment; or the apparatus 600 may be specifically the second communication apparatus in the foregoing embodiment or the chip used in the second communication apparatus, and may be configured to perform a procedure corresponding to the second communication apparatus in the foregoing method embodiment. To avoid repetition, details are not described herein again.

In addition, the transceiver unit may alternatively be a transceiver circuit (for example, may include a receiver circuit and a transmitter circuit), and the processing unit may be a processing circuit. In this embodiment of this application, the apparatus 600 may be the first communication apparatus or the second communication apparatus in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 7 is a diagram of another structure of a communication apparatus according to an embodiment of this application. As shown in FIG. 7, the communication apparatus 700 includes at least one processor 710 and a transceiver 720. The transceiver 720 is configured to send a signal and/or receive a signal. The processor 710 is configured to execute instructions, so that a function of the first communication apparatus in the methods shown in FIG. 3 to FIG. 5 is implemented, or a function of the second communication apparatus in the methods shown in FIG. 3 to FIG. 5 is implemented.

Optionally, the communication apparatus 700 further includes a memory 730, configured to store instructions. The processor 710 is coupled to the memory, and is configured to execute the instructions stored in the memory, to control the transceiver 7020 to send a signal and/or receive a signal.

It should be understood that the processor 710 and the memory 730 may be combined into one processing apparatus, and the processor 710 is configured to execute program code stored in the memory 730 to implement the foregoing functions. In specific implementation, the memory 730 may alternatively be integrated into the processor 710, or be independent of the processor 710.

It should be further understood that the transceiver 720 may include a receiver (or referred to as a receiver machine) and a transmitter (or referred to as a transmitter machine). The transceiver 720 may further include one or more antennas. The transceiver 720 may alternatively be a communication interface or an interface circuit.

When the communication apparatus 700 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may cause the method in the foregoing method embodiment to be implemented.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, a register, or the like. The storage medium is located in the memory, and a processor reads information in the memory and completes the steps in the foregoing methods in combination with hardware of the processor. To avoid repetition, details are not described herein again.

FIG. 8 is a diagram of another structure of a communication apparatus according to an embodiment of this application. As shown in FIG. 8, the apparatus 800 includes a processing circuit 810 and a transceiver circuit 820. The processing circuit 810 is configured to execute instructions, so that a function of the first communication apparatus in the methods shown in FIG. 3 to FIG. 5 is implemented, or a function of the second communication apparatus in the methods shown in FIG. 3 to FIG. 5 is implemented. The processing circuit 810 and the transceiver circuit 820 communicate with each other over an internal connection path, and the processing circuit 810 may control the transceiver circuit 820 to send a signal and/or receive a signal.

Optionally, the apparatus 800 may further include a storage medium 830. The storage medium 830 communicates with the processing circuit 810 and the transceiver circuit 820 over an internal connection path. The storage medium 830 is configured to store instructions, and the processing circuit 810 may execute the instructions stored in the storage medium 830.

In a possible implementation, the apparatus 800 is configured to implement a procedure corresponding to the first communication apparatus in the foregoing method embodiments.

In another possible implementation, the apparatus 800 is configured to implement a procedure corresponding to the second communication apparatus in the foregoing method embodiments.

According to the method provided in embodiments of this application, this application further provides a computer program product. The computer program product includes instructions. When the instructions are run by a processor, a function of the first communication apparatus in the methods shown in FIG. 3 to FIG. 5 is implemented, or a function of the second communication apparatus in the methods shown in FIG. 3 to FIG. 5 is implemented.

According to the method provided in embodiments of this application, this application further provides a computer-readable storage medium. The computer-readable storage medium includes instructions. When the instructions are run by a processor, a function of the first communication apparatus in the methods shown in FIG. 3 to FIG. 5 is implemented, or a function of the second communication apparatus in the methods shown in FIG. 3 to FIG. 5 is implemented.

According to the method provided in embodiments of this application, this application further provides a system, including the foregoing one or more first communication apparatuses and one or more second communication apparatuses.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state drive, SSD)), or the like.

In embodiments of this application, the term "example", "for example", or the like is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of ..." in this specification represents all or any combination of the listed items. For example, "at least one of A, B, and C" or "at least one of A, B, or C" may represent the following six cases: Only A exists, only B exists, only C exists, both A and B exist, both B and C exist, and A, B, and C all exist. In this specification, "at least one" means one or more. "a plurality of" indicates two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applied to a first communication apparatus, and the method comprises:
receiving a first downlink reference signal, and obtaining a first key based on the first downlink reference signal;
sending a first uplink reference signal;
receiving a first message, wherein the first message comprises check information of a second key, and the second key is obtained by a second communication apparatus based on the received first uplink reference signal;
determining a third key based on the first key and the check information of the second key; and
performing, based on the third key, security protection on data transmitted between the first communication apparatus and the second communication apparatus.

2. The method according to claim 1, wherein when the first uplink reference signal is sent, the method further comprises:
sending a preamble.

3. The method according to claim 1 or 2, wherein before receiving the first downlink reference signal, the method further comprises: receiving system information, wherein the system information comprises measurement configuration information and quantization configuration information; and
the obtaining the first key based on the first downlink reference signal comprises:
measuring the first downlink reference signal based on the measurement configuration information, to obtain a measurement result of the first downlink reference signal; and
quantizing the measurement result of the first downlink reference signal based on the quantization configuration information, to obtain the first key.

4. The method according to any one of claims 1 to 3, wherein the determining the third key based on the first key and the check information of the second key comprises:
determining, based on the first key and the check information of the second key, that the first key and the second key are aligned; and
determining the first key as the third key; or performing calculation on the first key to obtain a fourth key, and determining the fourth key as the third key.

5. The method according to any one of claims 1 to 3, wherein the determining the third key based on the first key and the check information of the second key comprises:
determining, based on the first key and the check information of the second key, that the first key and the second key are not aligned;
sending a second uplink reference signal on a resource indicated by the first message;
receiving a second downlink reference signal, and obtaining a fifth key based on the second downlink reference signal;
receiving check information of a sixth key, wherein the sixth key is obtained by the second communication apparatus based on the received second uplink reference signal; and
determining the third key based on the fifth key and the check information of the sixth key.

6. The method according to any one of claims 1 to 3, wherein the first message further comprises a first redundancy version RV of a first encoding matrix, and the first encoding matrix is determined by the second communication apparatus based on the second key; and
the determining the third key based on the first key and the check information of the second key comprises:
decoding the first key based on the first RV of the first encoding matrix to obtain a seventh key; and
determining the third key based on the seventh key and the check information of the second key.

7. The method according to claim 6, wherein the determining the third key based on the seventh key and the check information of the second key comprises:
determining, based on the seventh key and the check information of the second key, that the seventh key and the second key are aligned; and
determining the seventh key as the third key.

8. The method according to claim 6, wherein the determining the third key based on the seventh key and the check information of the second key comprises:
determining, based on the seventh key and the check information of the second key, that the seventh key and the second key are not aligned;
sending an RV request message, wherein the RV request message is used to request a second RV of the first encoding matrix;
receiving the second RV of the first encoding matrix;
decoding the first key based on the first RV and the second RV of the first encoding matrix to obtain an eighth key;
determining, based on the eighth key and the check information of the second key, that the eighth key and the second key are aligned; and
determining the eighth key as the third key.

9. The method according to any one of claims 1 to 8, wherein the first message is a random access response RAR message.

10. A data transmission method, wherein the method is applied to a second communication apparatus, and the method comprises:
sending a first downlink reference signal;
receiving a first uplink reference signal, and obtaining a second key based on the first uplink reference signal;
sending a first message, wherein the first message comprises check information of the second key;
determining a ninth key based on the second key; and
performing, based on the ninth key, security protection on data transmitted between the second communication apparatus and a first communication apparatus.

11. The method according to claim 10, wherein the method further comprises:
broadcasting system information, wherein the system information comprises measurement configuration information and quantization configuration information; and
the obtaining the second key based on the first uplink reference signal comprises:
measuring the first uplink reference signal based on the measurement configuration information, to obtain a measurement result of the first uplink reference signal; and
quantizing the measurement result of the first uplink reference signal based on the quantization configuration information, to obtain the second key.

12. The method according to claim 10 or 11, wherein the method further comprises:
receiving a preamble.

13. The method according to any one of claims 10 to 12, wherein the first key and the second key are aligned, and the determining the ninth key based on the second key comprises:
determining the second key as the ninth key; or performing calculation on the second key to obtain a tenth key, and determining the tenth key as the ninth key.

14. The method according to any one of claims 10 to 12, wherein the first key and the second key are not aligned, and the determining the ninth key based on the check information of the second key and the first key comprises:
sending a second downlink reference signal;
receiving a second uplink reference signal on a resource indicated by the first message;
obtaining a sixth key based on the second uplink reference signal;
sending check information of the sixth key by using the first message; and
determining the ninth key based on a fifth key and the check information of the sixth key, wherein the fifth key is obtained by the first communication apparatus based on the second downlink reference signal.

15. The method according to any one of claims 10 to 14, wherein the sending the first message comprises:
determining a first encoding matrix based on the second key; and
sending a first redundancy version RV of the first encoding matrix by using the first message.

16. The method according to claim 15, wherein the method further comprises:
receiving an RV request message, wherein the RV request message is used to request a second RV of the first encoding matrix; and
sending the second RV of the first encoding matrix based on the RV request message by using the first message.

17. The method according to any one of claims 10 to 16, wherein the first message is a random access response RAR message.

18. A communication apparatus, wherein the communication apparatus comprises a processor and a storage medium, wherein the storage medium stores instructions; and when the instructions are run by the processor, the method according to any one of claims 1 to 9 is implemented.

19. A communication apparatus, wherein the communication apparatus comprises a processor and a communication interface, the communication interface is configured to input and/or output a signal, and the processor is configured to execute a computer program or instructions, so that the method according to any one of claims 1 to 9 is implemented.

20. A communication apparatus, wherein the communication apparatus comprises a processor and a storage medium, wherein the storage medium stores instructions; and when the instructions are run by the processor, the method according to any one of claims 10 to 17 is implemented.

21. A communication apparatus, wherein the communication apparatus comprises a processor and a communication interface, the communication interface is configured to input and/or output a signal, and the processor is configured to execute a computer program or instructions, so that the method according to any one of claims 10 to 17 is implemented.

22. A communication system, comprising the communication apparatus according to claim 18 and/or the communication apparatus according to claim 20, or comprising the communication apparatus according to claim 19 and/or the communication apparatus according to claim 21.

23. A computer-readable storage medium, wherein the computer-readable storage medium comprises instructions; and when the instructions are run by a processor, the method according to any one of claims 1 to 9 is implemented, or the method according to any one of claims 10 to 17 is implemented.

24. A computer program product, wherein the computer program product comprises instructions; and when the instructions are run by a processor, the method according to any one of claims 1 to 9 is implemented, or the method according to any one of claims 10 to 17 is implemented.
